# EUROPEAN PATENT SPECIFICATION

(11) **EP 2 595 298 B1**
(45) Date of publication and mention of the grant of the patent: **27.06.2018**
(21) Application number: 11806474.0
(22) Date of filing: 11.07.2011
(51) Int. Cl.: H02M 7/12, H02M 1/42, H02M 7/217

(54) **RECTIFIER CIRCUIT DEVICE**
GLEICHRICHTER
REDRESSEUR

(30) Priority: 12.07.2010 JP 2010157459
(43) Date of publication of application: 22.05.2013
(73) Proprietor: Panasonic Corporation, Kadoma-shi Osaka 571-8501 (JP)
(72) Inventor: YOSHIDA, Izumi, Osaka 540-6207 (JP); DOYAMA, Yoshiaki, Osaka 540-6207 (JP); KYOGOKU, Akihiro, Osaka 540-6207 (JP); KAWASAKI, Tomohiro, Osaka 540-6207 (JP)
(74) Representative: Eisenführ Speiser
(86) International application number: PCT/JP2011/003960
(87) International publication number: WO 2012/008139

(56) References cited:
- JP-A- 7 007 946
- JP-A- 2003 153 543
- JP-A- 2007 129 849
- MORICI R ET AL: "VARIABLE STRUCTURE CONTROLLER FOR AC/DC BOOST CONVERTER", PROCEEDINGS OF THE INTERNATIONAL CONFERENCE ON INDUSTRIAL ELECTRONICS, CONTROL AND INSTRUMENTATION. (IECON). BOLOGNA, SEPT. 5 - 9, 1994. PLENARY SESSION POWER ELECTRONICS; [PROCEEDINGS OF THE INTERNATIONAL CONFERENCE ON INDUSTRIAL ELECTRONICS, CONTRO, vol. 3 OF 03, 5 September 1994 (1994-09-05), pages 1449-1454, XP000526754, ISBN: 978-0-7803-1329-3

## Description

### Technical Field

The present invention relates to rectifier circuit devices to be applied to devices for rectifying single-phase AC power supplies such as those for domestic use to form substantially-DC power supplies and for driving DC loads with the formed DC power supplies, and devices for converting such resultant DC electricity into AC electricity with arbitrary frequencies, again, through inverter circuits and for driving motors at variable speeds, such as devices for performing cooling, heating or freezing of food, and the like with heat pumps structured by compressing refrigerants with compressors. The present invention relates to driving and control of rectifier circuit devices with higher efficiency, which are capable of reducing harmonic components contained in electric currents from power supplies and also are capable of improving the power factors, in such various types of devices, for reducing burdens on the electric power transmission systems.

### Background Art

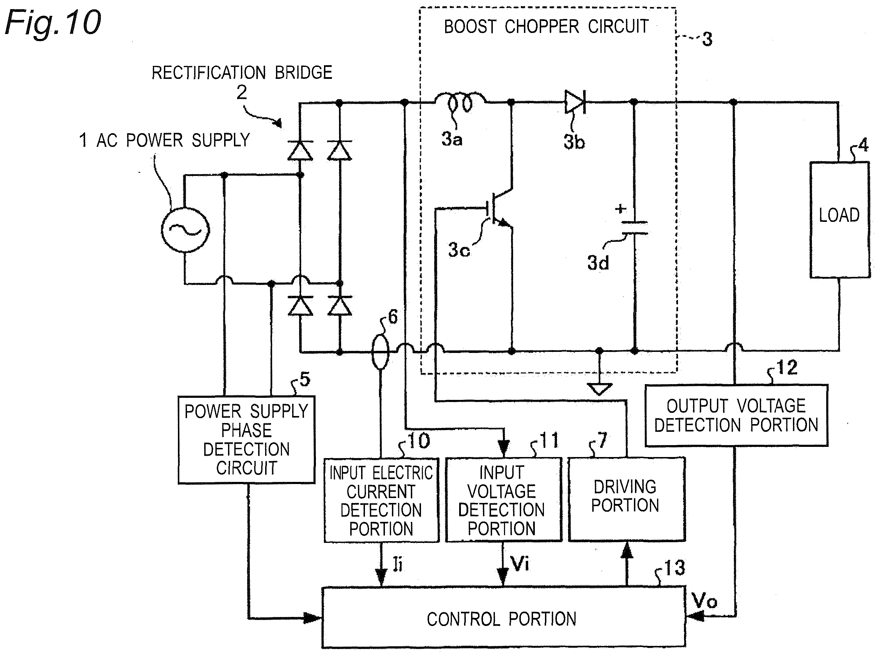

Conventionally, as illustrated in Fig. 10, for example, a rectifier circuit device of this type is adapted to short-circuit an AC power supply 1 with a semiconductor switch 3c being in an ON state, through a rectification bridge 2 and a reactor 3a, to charge the reactor 3a with an electric current and, further, is adapted to flow an electric current to a load 4 from the reactor 3a through a diode 3b when the semiconductor switch 3c has been brought into in an OFF state, in order to flow an electric current from the power supply even within intervals within which the momentum voltage of the AC power supply 1 is lower. With this structure, it is possible to reduce harmonic components in the electric current from the power supply, thereby improving the power factor. However, by turning on and off the semiconductor switch 3c (hereinafter, referred to as chopping), an electric current is flowed through the semiconductor switch 3c being subjected to the chopping, which induces losses in the circuit. In order to overcome the problem of such circuit losses, there have been suggested methods which perform chopping only within certain AC-phase intervals while halting it within the remaining intervals, rather than continuously chopping the semiconductor switch 3c (refer to Patent Literature 1, for example).

Fig. 10 illustrates a conventional active rectifier circuit device described in Patent Literature 1. This rectifier circuit device is adapted to rectify the AC power supply 1 with the rectification bridge 2 for converting the AC electricity into DC electricity including pulsations and, further, to supply electric power to a smoothing capacitor 3d and the load 4 through the reactor 3a and the diode 3b. The conventional active rectifier circuit device illustrated in Fig. 10 is a rectifier circuit device having a power-factor improving function provided by a boost chopper circuit 3, wherein the boost chopper circuit 3 is structured to be capable of short-circuiting the output of the rectification bridge 2 by the semiconductor switch 3c, through the reactor 3a. The boost chopper circuit 3 is controlled, in such a way as to detect an input electric current with detection means 6 and an input electric-current detection portion 10, further to perform chopping on the semiconductor switch 3c such that the input electric current has the same shape as that of the input voltage waveform (the power-supply voltage waveform) detected by an input voltage detection portion 11 and, further, to adjust the amplitude of the input electric current such that the output voltage comes to be a desired voltage.

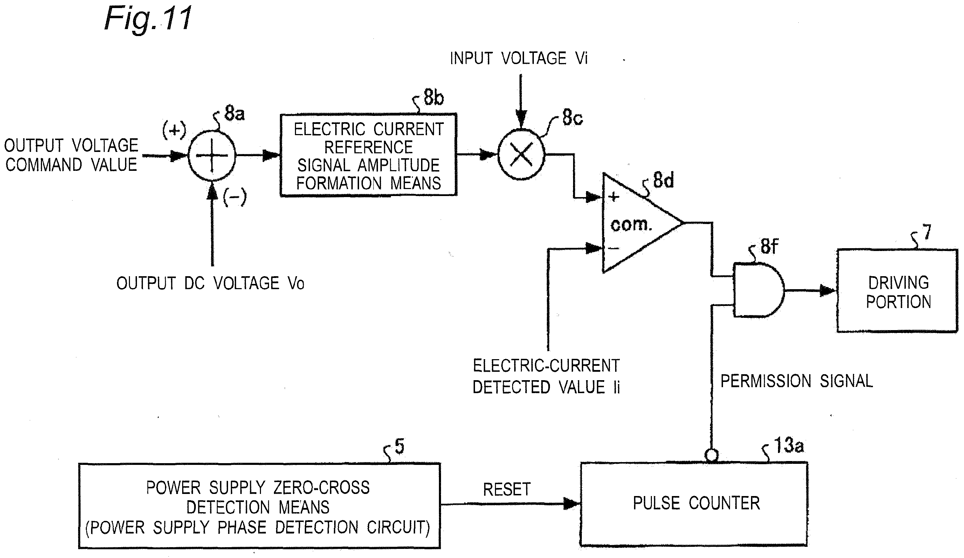

Particularly, Patent Literature 1 suggests a contrivance for chopping the semiconductor switch only within minimum intervals necessary for reducing harmonics, in order to reduce circuit losses. Fig. 11 is a control block diagram illustrating a control method for attaining this. Power-supply zero-cross detection means 5 is adapted to detect the phase of the power-supply voltage, and the semiconductor switch 3c in Fig. 10 is controlled, through a pulse counter 13a, in such a way as to allow the chopping of the semiconductor switch 3c only within certain intervals while bringing the semiconductor switch 3c into an OFF state within the other intervals. This control method is intended to realize a rectifier circuit device capable of reducing losses while hardly increasing power-supply harmonics.

Further, while the control method in Patent Literature 1 necessitates the waveform of the power-supply voltage, there have been also suggested methods for realizing the same operations using predetermined waveforms, without using the waveform of a power-supply voltage (refer to Patent Literature 2, for example). Further, there have been also suggested simple control methods which target the same effects without using target electric-current waveforms (refer to Patent Literature 3, for example).

The article *"*Variable Structure Controller For AC/DC Boost Converter", Proceedings of the International Conference on Industrial Electronics, Control and Instrumentation (IECON), vol. 3, pages 1449 to 1454, 1994, by R. Morici et al., discloses a variable structure controller for an AC/DC boost converter ensuring both robustness to load variations and near-unity power factor.

### Citation List

### Patent Literatures

Patent Literature 1: Unexamined Japanese Patent Publication No. 2005-253284
Patent Literature 2: Unexamined Japanese Patent Publication No. 2007-129849
Patent Literature 3: Unexamined Japanese Patent Publication No. 2000-224858

### Summary of Invention

### Technical Problem

However, with the structure of the aforementioned conventional rectifier circuit device, under conditions where the load is fixed, the output voltage is controlled to be constant and, also, the chopping of the semiconductor switch is performed within fixed intervals. Therefore, if the output-voltage detection means involves errors, this changes the electric-current waveform. For example, in cases of rectifying an AC voltage with an effective value of 200 V to provide a DC voltage of about 280 V, the DC voltage is varied by only 1 V, thereby largely changing the electric-current waveform. Such an accuracy of 1 V with respect to a DC
voltage of 280 V corresponds to about 0.3 %. In cases of dividing the voltage with resistances for processing it into a lower voltage, in detecting the voltage, it is necessary to provide resistances with significantly-higher accuracy. Therefore, in consideration of the accuracy of the detection of the output voltage, it is necessary to set the chopping intervals to be longer, in order to reduce harmonics even in such changed electric-current waveforms. This induces the problem of increases of circuit losses.

Further, with such conventional rectifier circuit devices, the loss decreases as the output voltage is lowered. However, if an attempt is made to set the output voltage to be a lower voltage than a momentum value of the power-supply voltage, the chopping is performed, through control, within the predetermined chopping intervals, even when the AC voltage is lower than the output voltage within the intervals within which the semiconductor switch is subjected to chopping. This induces a phenomenon that the output voltage is raised due to boosting operations within these chopping intervals. Therefore, such conventional rectifier circuit devices have had the problem of difficulty of setting the output voltage to be lower, while involving reduced losses.

The present invention is made in order to overcome the problems in the aforementioned conventional rectifier circuit devices and aims at providing a rectifier circuit device which is capable of reducing power-supply harmonic electric currents regardless of the accuracy of the detection of the output voltage and, also, is capable of reducing losses.

### Solution to Problem

In order to overcome the aforementioned conventional problems, a rectifier circuit device according to the present invention is provided with means for detecting the phase of an AC voltage, further, is adapted to form a target electric-current waveform according to the detected phase and, further, is provided with means for detecting an electric current in the AC side or an electric current flowing from the AC side to the DC side; means for detecting a DC voltage; and means for adjusting and controlling the chopping on the semiconductor switch such that a detected electric-current waveform has a shape equal to that of the target electric-current waveform and, further, for adjusting an amplitude of the target electric-current waveform such that the DC voltage comes to be a desired voltage; wherein the desired DC voltage is adjusted such that a phase (θ_{OFF}) at which the semiconductor switch changes from a chopping state to a chopping halt state comes to be a desired phase.

Further, in adjusting the desired DC voltage, the rectifier circuit device determines a phase (θ_{ON}) at which the semiconductor switch changes from the halt state to the chopping state, in addition to the phase (θ_{OFF}) at which the semiconductor switch changes from the chopping state to the chopping halt state, further calculates a phase width (θ_{ON} width) within which the chopping state is continued, from the phase (θ_{OFF}) at which the semiconductor switch changes from the chopping state to the chopping halt state, and from the phase (θ_{ON}) at which the semiconductor switch changes from the halt state to the chopping state, and further adjusts the desired DC voltage such that the phase width (θ_{ON} width) within which the chopping state is continued comes to be a preset value, in preference to the adjustment of the DC voltage based on the phase (θ_{OFF}) at which the semiconductor switch changes from the chopping state to the chopping halt state, when the phase width (θ_{ON} width) within which the chopping state is continued is less than the preset value, before the phase (θ_{OFF}) at which the semiconductor switch changes from the chopping state to the chopping halt state comes to be the desired phase (θ_{OFF}*).

Further, the target electric-current waveform can be a target electric-current waveform which has the same frequency and the same phase as those of the AC voltage waveform, further has a monotonous increase or a combination of a monotonous increase and a constant state within the AC-phase range of 0 to 90 degrees or 180 to 270 degrees, and, further, has a target value of zero in an interval within the AC phase ranges of 90 to 180 degrees and 270 to 360 degrees. Also, the target electric-current waveform can be a target electric-current waveform which has a monotonous increase or a combination of a monotonous increase and a constant value, up to the desired phase at which the semiconductor switch is desired to be changed to the chopping halt, within the AC phase range of 0 to 90 degrees or 180 to 270 degrees and, further, has a target value of zero in an interval within the AC phase ranges of 90 to 180 degrees and 270 to 360 degrees. Further, the rectifier circuit device is provided with means for detecting an electric current in the AC side or an electric current flowing from the AC side to the DC side; means for detecting a DC voltage; means for adjusting and controlling the chopping on the semiconductor switch such that a detected electric current has the same waveform as the target electric-current waveform and, further, for adjusting an amplitude of the target electric-current waveform such that the DC voltage comes to be a desired voltage; wherein the desired DC voltage is adjusted such that the phase (θ_{OFF}) at which the semiconductor switch changes from the chopping state to the chopping halt state, which is resulted from the execution of the aforementioned control, comes to be the desired phase.

Accordingly, even if the DC voltage is detected with such accuracy as to induce errors, the DC voltage is adjusted to have a relatively-appropriate value, which enables provision of the same electric-current waveform, thereby continuously reducing losses. Furthermore, a constraint is exerted on the phase width (θ_{ON}width) within which the chopping state is continued, which enables realization of rectification operations which induce reduced harmonic electric currents, without being influenced by the magnitudes of the electric power and the reactor.

### Advantageous Effects of Invention

With the rectifier circuit device according to the present invention, it is possible to realize rectification operations which continuously reduce losses and, further, induce reduced harmonic electric currents, without being influenced by the magnitudes of the electric power and the reactor.

### Brief Description of Drawings

Fig. 1 is a circuit block diagram illustrating an entire circuit structure of a first embodiment according to the present invention.
Fig. 2 is a control block diagram illustrating processing inside a control circuit in Fig. 1.
Fig. 3 is a flow chart illustrating contents of processing by chopping phase/width detection means of the first embodiment according to the present invention.
Fig. 4 is a waveform diagram illustrating an operational principle of the first embodiment according to the present invention.
Fig. 5 is a waveform diagram illustrating an operational principle of a second embodiment according to the present invention.
Fig. 6 is a waveform diagram illustrating examples of target electric-current waveforms usable of the second embodiment according to the present invention.
Fig. 7 is a waveform diagram illustrating the principle of detection of the power-supply phase of the first to fourth embodiments according to the present invention.
Fig. 8 is a circuit block diagram illustrating an entire circuit structure of a third embodiment according to the present invention.
Fig. 9 is a circuit block diagram illustrating an entire circuit structure of a fourth embodiment according to the present invention.
Fig. 10 is the circuit block diagram illustrating the entire structure of the conventional rectifier circuit device.
Fig. 11 is the control block diagram illustrating processing inside the control circuit in the conventional rectifier circuit device.

### Description of Embodiments

According to the present invention, there is provided means for detecting the phase of an AC voltage and, further, a target electric-current waveform is formed according to the detected phase. Further, there are provided means for detecting an electric current in the AC side or an electric current flowing from the AC side to the DC side; means for detecting a DC voltage; means for adjusting and controlling the chopping on the semiconductor switch such that a detected electric-current waveform has a shape equal to that of the target electric-current waveform and, further, for adjusting an amplitude of the target electric-current waveform such that the DC voltage comes to be a desired voltage; wherein the desired DC voltage is adjusted such that a phase at which the semiconductor switch changes from a chopping state to a chopping halt state, which is resulted from the execution of the aforementioned control, comes to be a desired phase.

Further, the means for adjusting and controlling the chopping on the semiconductor switch is adapted to determine a phase (θ_{ON}) at which the semiconductor switch changes from a halt state to a chopping state, in addition to the phase (θ_{OFF}) at which the semiconductor switch changes from the chopping state to the chopping halt state, further to calculate a phase width (θ_{ON} width) within which the chopping state is continued, from the phase (θ_{OFF}) at which the semiconductor switch changes from the chopping state to the chopping halt state, and from the phase (θ_{ON}) at which the semiconductor switch changes from the halt state to the chopping state, and further to adjust the desired DC voltage such that the phase width (θ_{ON} width) within which the chopping state is continued comes to be a preset value, in preference to the adjustment of the DC voltage based on the phase (θ_{OFF}) at which it changes from the chopping state to the chopping halt state, when the phase width (θ_{ON} width) within which the chopping state is continued is less than the preset value, before the phase (θ_{OFF}) at which it changes from the chopping state to the chopping halt state comes to be the desired phase (θ_{OFF}*).

Further, a target electric-current waveform is used, wherein the target electric-current waveform is constituted by a first target electric-current waveform which has the same frequency and the same phase as those of the AC voltage waveform, further has a monotonous increase or a combination of a monotonous increase and a constant state with in the AC phase range of 0 to 90 degrees or 180 to 270 degrees and, further, has a target value of zero in an interval within the AC phase ranges of 90 to 180 degrees and 270 to 360 degrees or by a second target electric-current waveform which has a monotonous increase or a combination of a monotonous increase and a constant state up to the desired phase at which the semiconductor switch is desired to be changed from the chopping state to the chopping halt state, within the AC phase range of 0 to 90 degrees or 180 to 270 degrees and, further, has a target value of zero in an interval within the AC phase ranges of 90 to 180 degrees and 270 to 360 degrees. Further, there are provided means for detecting an electric current in the AC side or an electric current flowing from the AC side to the DC side, means for detecting a DC voltage, means for adjusting and controlling the chopping on the semiconductor switch such that a detected electric-current waveform has the same waveform as the target electric-current waveform and, further, for adjusting an amplitude of the target electric-current waveform such that the DC voltage comes to be a desired voltage. Further, when the phase width (θ_{ON} width) within which the chopping state is continued, which is resulted from the execution of the aforementioned control, is larger than the preset value, the desired DC voltage is adjusted such that the phase (θ_{OFF}) at which the semiconductor switch changes from the chopping state to the chopping halt state comes to be the desired phase. On the other hand, when the phase width (θ_{ON} width) within which the chopping state is continued is equal to or less than the preset value, the desired DC voltage is adjusted such that the phase width (θ_{ON} width) within which the chopping state is continued comes to be the preset value (θ_{ON} width*).

Accordingly, even if the DC voltage is detected with such accuracy as to induce errors, the DC voltage is adjusted to have a relatively-appropriate value, which enables provision of the same electric-current waveform, thereby continuously reducing losses. Furthermore, a constraint is exerted on the phase width (θ_{ON} width) within which the chopping state is continued, which can realize rectification operations which induce reduced harmonic electric currents, without being influenced by the magnitudes of the electric power and the reactor.

Further, the chopping state and the chopping halt state according to the present invention refer to switching states of the semiconductor switch during half the period of the power supply.

Hereinafter, embodiments of the present invention will be described, with reference to the drawings. Further, the present invention is not limited to these embodiments.

### (First Embodiment)

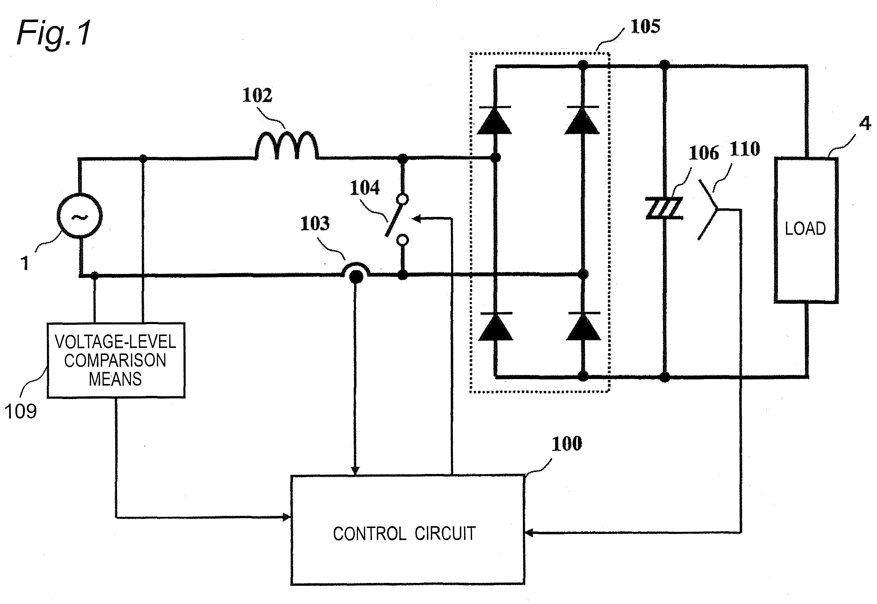

Fig. 1 is a circuit block diagram illustrating the structure of the entirety of a rectifier circuit device according to a first embodiment of the present invention.

Referring to Fig. 1, a loop is formed for short-circuiting an AC power supply 1 through a reactor 102 and a semiconductor switch 104 being in an ON state. Electric-current detection means 103 is provided in such a way as to detect an electric current in the loop, and the result of the detection is inputted to a control circuit 100. When the AC power supply 1 is being short-circuited by the semiconductor switch 104 being in an ON state, the electric current in the reactor 102 is gradually increased. Further, if the semiconductor switch 104 is turned off, the electric current having being flowing through the reactor 102 is rectified by a diode bridge 105 and, further, flows into a smoothing capacitor 106 and a load 4, thereby driving the load 4. The DC voltage applied to the load 4 is detected by DC voltage detection means 110 and, thus, the detected DC voltage is inputted to the control circuit 100. Further, voltage-level comparison means 109 for making a comparison regarding the voltage level of the AC power supply 1 is provided, and the voltage-level comparison means 109 creates binary information indicative of whether or not the voltage level of the AC power supply 1 is being equal to or higher than a certain value and, further, outputs this information to the control circuit 100.

The control circuit 100 detects the phase of the AC power supply 1 based on the binary information indicative of whether or not the AC power supply 1 is being equal to or higher than the certain voltage level, further creates a target electric-current waveform, and performs chopping on the semiconductor switch 104 such that the result of detection by the electric-current detection means 103 is close to a similar shape to the target electric-current waveform. Further, the control circuit 100 adjusts the homothetic ratio of the target electric-current waveform, according to the deviation therebetween such that the voltage information from the DC voltage detection means 110 comes to be equal to a desired voltage set inside of the control circuit. Namely, the control circuit 100 performs control in such a way as to increase the homothetic ratio of the target electric-current command for generating a larger electric current, when the actual DC voltage value is lower than the desired DC voltage value. Further, the control circuit 100 performs control in such a way as to generate a smaller electric current, when the actual DC voltage value is higher than the desired DC voltage value.

Further, based on the chopping condition, the control circuit 100 determines the AC voltage phase at which the halt of chopping of the semiconductor switch 104 is started, and the AC voltage phase at which the chopping of the semiconductor switch 104 is started. Further, from both the phase at which the chopping is started and the phase at which the chopping halt is started, the control circuit 100 determines the phase width within which the chopping of the semiconductor switch 104 is continued. If the phase width within which the chopping of the semiconductor switch 104 is continued is larger than a preset value, the control circuit 100 determines whether or not the AC voltage phase at which the halt of chopping of the semiconductor switch 104 is started has a desired value, and, further, the control circuit 100 adjusts the desired DC voltage value according to the deviation from the desired value.

On the other hand, if the phase width within which the chopping of the semiconductor switch 104 is continued is equal to or less than the preset value, the desired DC voltage value is adjusted, according to the deviation of the phase width within which the chopping of the semiconductor switch 104 is continued from the preset value.

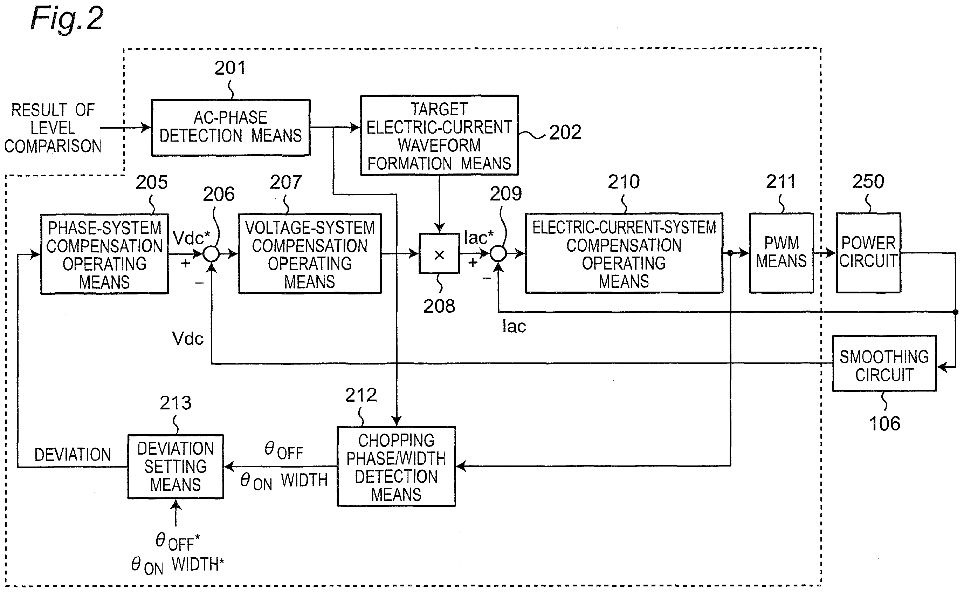

Fig. 2 is a block diagram illustrating flows of control information in the control circuit 100 in Fig. 1. The final control target of the system is to control the phase (θ_{OFF}) at which a changeover occurs from a chopping state to a chopping halt to a desired value (θ_{OFF}*), if the phase width (θ_{ON} width) within which the chopping of the semiconductor switch 104 is continued is larger than a set value (θ_{ON} width*) . On the other hand, the final control target of the system is to control the phase width (θ_{ON} width) within which the chopping of the semiconductor switch 104 is continued to the set value (θ_{ON} width*), if the phase width (θ_{ON} width) within which the chopping of the semiconductor switch 104 is continued is equal to or less than the set value (θ_{ON} width*).

At first, based on the information about the binarized value of the voltage level of the AC power supply, AC phase detection means 201 detects the AC phase. An example of the detection method with the AC phase detection means 201 will be described, in detail, later. Based on the resultant AC-phase information, target electric-current waveform formation means 202 is caused to create a target electric-current waveform and, further, is caused to input it to a multiplier 208. The target electric-current waveform will be described later.

Chopping phase/width detection means 212 outputs AC phase information outputted from the AC phase detection means 201, to deviation setting means 213. Further, the chopping phase/width detection means 212 outputs, to the deviation setting means 213, information about the phase (θ_{OFF}) at which the transition to the chopping halt occurred, and the phase width (θ_{ON} width) within which the chopping was continued, out of information about the phase (θ_{OFF}) at which the changeover occurred from the chopping to the chopping halt, and information about the phase at which the changeover occurred from the chopping halt to the chopping, which have been outputted from electric-current system compensation operating means 210, and the phase width (θ_{ON} width) within which the chopping was continued, which has been calculated from the information about the respective phases.

The deviation setting means 213 calculates deviations to be used for control, from the information about the phase (θ_{OFF}) at which the changeover occurred from the chopping to the chopping halt, which is information from the chopping phase/width detection means 212, and a target value (θ_{OFF}*) thereof, and from the phase width (θ_{ON} width) within which the chopping was continued, and a limit value (θ_{ON} width*) thereof. Further, the deviation setting means 213 outputs the deviations to phase-system compensation operating means 205.

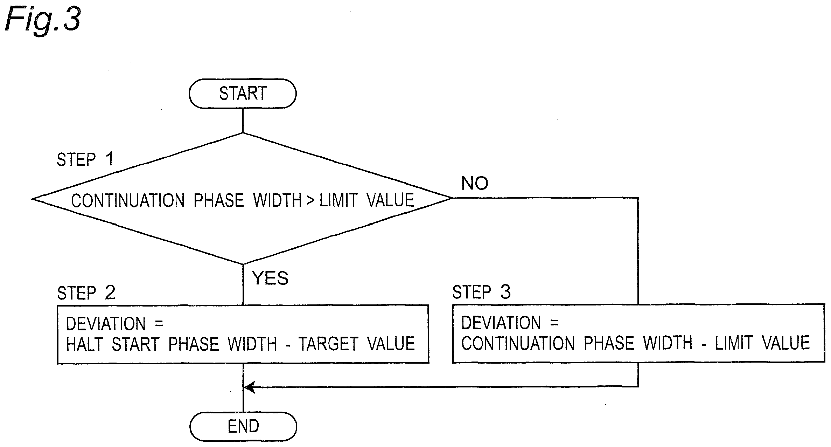

Hereinafter, operations of the deviation setting means 213 will be described, with reference to a flow chart in Fig. 3.

In step 1, a comparison is made between the phase width (θ_{ON} width) within which the chopping is continued and the limit value (θ_{ON} width*) thereof, and if the phase width (θ_{ON} width) within which the chopping is continued is larger, the processing proceeds to step 2. Otherwise, it proceeds to step 3. In step 2, the difference between information about the phase (θ_{OFF}) at which the changeover occurred from the chopping to the chopping halt and the target value (θ_{OFF}*) thereof is determined and, further, the difference is outputted as the deviation to the compensation operating means 205. Then, the processing ends.

In step 3, the difference between the phase width (θ_{ON} width) within which the chopping is continued and the limit value (θ_{ON}*) thereof is determined and, further, the difference is outputted as the deviation to the compensation operating means 205. Then, the processing ends. By maintaining a certain length of a phase width (θ_{ON} width) within which chopping is continued, as described above, it is possible to prevent aggravation of power-supply harmonics with respect to the magnitudes of the electric power and the reactor.

The phase-system compensation operating means 205 illustrated in Fig. 2 is adapted to perform compensation operations for stably maintaining the phase (θ_{OFF}) at which the changeover to the chopping halt state occurs, or the phase width (θ_{ON} width) within which the chopping is continued.

The result of the compensation operations forms an output-voltage command voltage (Vdc*), which is transmitted to comparison means 206. The comparison means 206 makes a comparison thereof with the actual output voltage and, further, transmits the voltage deviation resulted from the comparison, to voltage-system compensation operating means 207 for DC-voltage control. The voltage-system compensation operating means 207 executes compensating operations for making the actual voltage coincident with the output-voltage command voltage (Vdc*) and stabilized thereat. The result of the compensating operations is transmitted to a multiplier 208, which multiplies it by the target electric-current waveform. Namely, if the actual voltage is lower than the output-voltage command voltage the amplitude of the target electric-current waveform is increased. Otherwise, it is decreased. The result outputted from the multiplier 208 is transmitted, as a momentary electric-current command (Iac*), to comparison means 209. The comparison means 209 makes a comparison between the momentary electric-current command (Iac*) and the actual electric-current value (lac) and, further, transmits the electric-current deviation resulted from the comparison, to electric-current-system compensation operating means 210. The electric-current-system compensation operating means 210 performs compensating operations for stably and immediately making the electric current coincident with the commanded value. The result of the compensating operations is transmitted to PWM means 211, and then converted into ON/OFF information for the semiconductor switch. On the other hand, the result of the compensation operations is also transmitted to the chopping phase/width detection means 212, thereby forming a control loop regarding the phase.

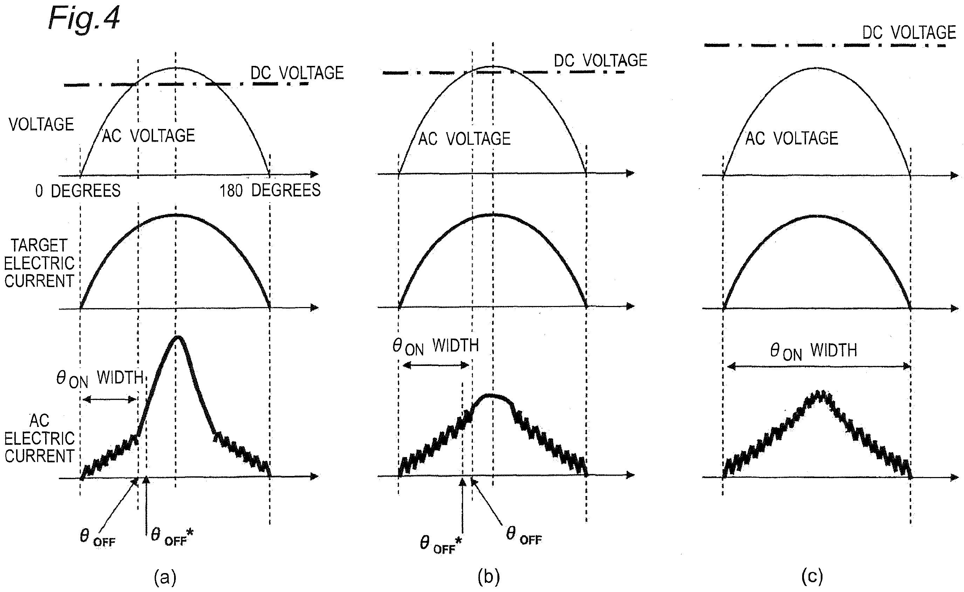

Fig. 4 illustrates waveforms indicating control operations. Fig. 4 illustrates a waveform indicating a correlation between the AC voltage and the DC voltage in an upper stage, a waveform indicating a target electric-current waveform in a middle stage, and a waveform indicating an actual electric-current waveform in a lower stage. Fig. 4(a) illustrates a case where the output voltage (the DC voltage) is lower, and the phase (θ_{OFF}) at which the chopping of the semiconductor switch is halted is smaller than the desired phase (θ_{OFF}*). In this case, the AC voltage is made higher than the DC voltage within increased phase intervals, thereby increasing the electric current flowed from the AC power supply to the DC side through the reactor and the diode. This increases the acuteness of the electric-current waveform, thereby increasing harmonic components in the electric current.

On the other hand, Fig. 4(b) illustrates a case where the output voltage (the DC voltage) is higher, and the phase (θ_{OFF}) at which the chopping of the semiconductor switch is halted is larger than the desired phase(θ_{OFF}*). In this case, the AC voltage is made higher than the DC voltage within decreased phase intervals, which decreases the electric current flowed from the AC power supply to the DC side through the reactor and the diode, thereby decreasing harmonic components in the electric current. However, referring to Fig. 4(b), in comparison with the waveforms in Fig. 4(a), the chopping of the semiconductor switch is performed within increased intervals, thereby increasing losses in the circuit. However, in this case, when the phase width (θ_{ON} width) within which the chopping is continued is smaller than the limit value (θ_{ON} width*), the phase (θ_{OFF}) at which the changeover occurs from the chopping to the chopping halt does not reach the target value (θ_{OFF}*), but the securing of the phase width (θ_{ON} width) within which the chopping is continued is prioritized and, therefore, operations for securing the limit value (θ_{ON} width*) of the phase width within which the chopping is continued are performed.

Fig. 4(c) illustrates a case where the output voltage (the DC voltage) is further higher, and the chopping of the semiconductor switch is performed over the entire range. In this case, operations for lowering the output voltage are performed, until the phase (θ_{OFF}) at which the chopping of the semiconductor switch is halted comes to be equal to the desired phase (θ_{OFF}*).

Further, if the AC power supply involves distortions, this may induce a plurality of phases at which the changeover occurs from the chopping state to the chopping halt state during half the period of the AC power supply. In this case, by selecting a phase closer to an AC-power-supply phase of 90 degrees or 270 degrees, it is possible to perform stable control. Further, by selecting a phase closer to a phase at which the AC electric current has a maximum momentum value, rather than to an AC-power-supply phase of 90 degrees or 270 degrees, it is also possible to provide the same effects.

### (Second Embodiment)

Next, a rectifier circuit device according to a second embodiment of the present invention will be described. The rectifier circuit device according to the second embodiment has substantially the same structure as that of the rectifier circuit device according to the aforementioned first embodiment, but it is different therefrom in driving and control of the rectifier circuit device.

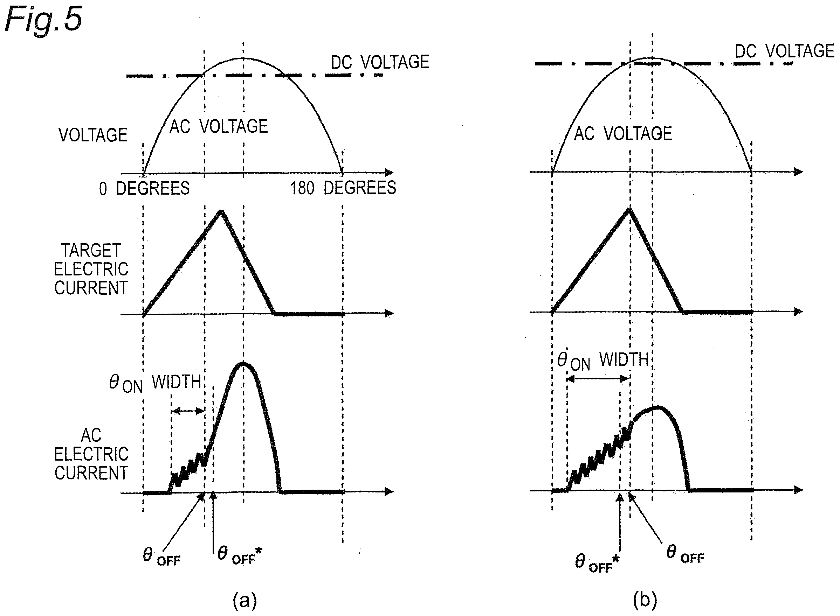

Fig. 5 is a waveform diagram illustrating the operational principle of a control method which can further reduce losses, by causing the target electric-current waveform to form a waveform other than a sine waveform. Particularly, when the load is smaller, even if waveform distortions are increased, it is possible to further reduce losses, since it has smaller harmonic electric currents. Fig. 5 illustrates a waveform indicating a correlation between the AC voltage and the DC voltage in an upper stage, a waveform indicating a target electric-current waveform in a middle stage, and a waveform indicating an actual electric-current waveform in a lower stage. Fig. 5(a) illustrates a case where the output voltage (the DC voltage) is lower, and the phase (θ_{OFF}) at which the chopping of the semiconductor switch is halted is smaller than a desired phase (θ_{OFF}*). In this case, the AC voltage is made higher than the DC voltage within increased phase intervals, thereby increasing the electric current flowed from the AC power supply to the DC side through the reactor and the diode. This increases the acuteness of the electric-current waveform, thereby increasing harmonic components in the electric current.

On the other hand, Fig. 5(b) illustrates a case where the output voltage (the DC voltage) is higher, and the phase (θ_{OFF}) at which the chopping of the semiconductor switch is halted is larger than the desired phase(θ_{OFF}*). In this case, the AC voltage is made higher than the DC voltage within decreased phase intervals, which decreases the electric current flowed from the AC power supply to the DC side through the reactor and the diode, thereby decreasing harmonic components in the electric current. However, referring to Fig. 5(b), in comparison with the waveforms in Fig. 5(a), the chopping of the semiconductor switch is performed within increased intervals, thereby increasing losses in the circuit.

However, in this case, when the phase width (θ_{ON} width) within which the chopping is continued is smaller than a limit value (θ_{ON} width*), the phase (θ_{OFF}) at which the changeover occurs from the chopping to the chopping halt does not reach a target value (θ_{OFF}*), but the securing of the phase width (θ_{ON}width) within which the chopping is continued is prioritized and, therefore, operations for securing the limit value (θ_{ON} width*) of the phase width within which the chopping is continued are performed.

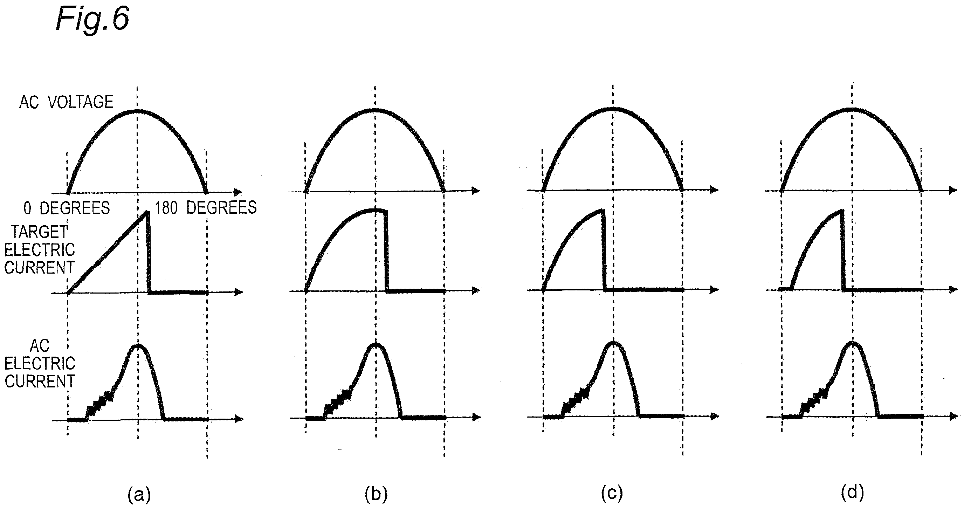

The waveform used as a target electric-current waveform has an ascent in the former half of the 180-degrees interval and, further, has a zero section in the latter half. For example, in the middle stage in Fig. 5, the waveform has a monotonous ascent in the former half of the 180-degrees interval, further has a decrease, on the contrary, slightly before 90 degrees and, further, has a value of zero in the later half. Fig. 6 illustrates another examples of waveforms. Fig. 6(a) illustrates a waveform which instantaneously comes to have a value of zero, instead of having a monotonous-decrease interval, in comparison with the waveform in the middle stage in Fig. 5. Fig. 6(b) illustrates a waveform which has an increase in a sine-wave shape in a monotonous increase interval and, further, has a value of zero in an interval within the latter half. Further, as illustrated in Fig. 6(c), the waveform can have a value of zero, before 90 degrees, by providing a constraint condition. Further, as illustrated in Fig. 6(d), the waveform can have a value of zero within a some interval from 0 degrees and, then, can have a monotonous increase thereafter.

Referring to Figs. 6(c) and (d), the target electric current comes to be zero before 90 degrees. However, by providing a desired phase at which the changeover occurs from the semiconductor-switch chopping operation to the chopping halt before the phase at which it comes to be zero, it is also possible to similarly use them. Furthermore, according to the present operations, since the DC voltage is lower than the maximum momentum voltage of the AC voltage, near 90 degrees, an electric current flows from the power supply through the reactor and the diode and, therefore, the power-supply electric current is kept flowing even after the target electric current comes to be zero. This can realize an electric current with less harmonic components with higher efficiency.

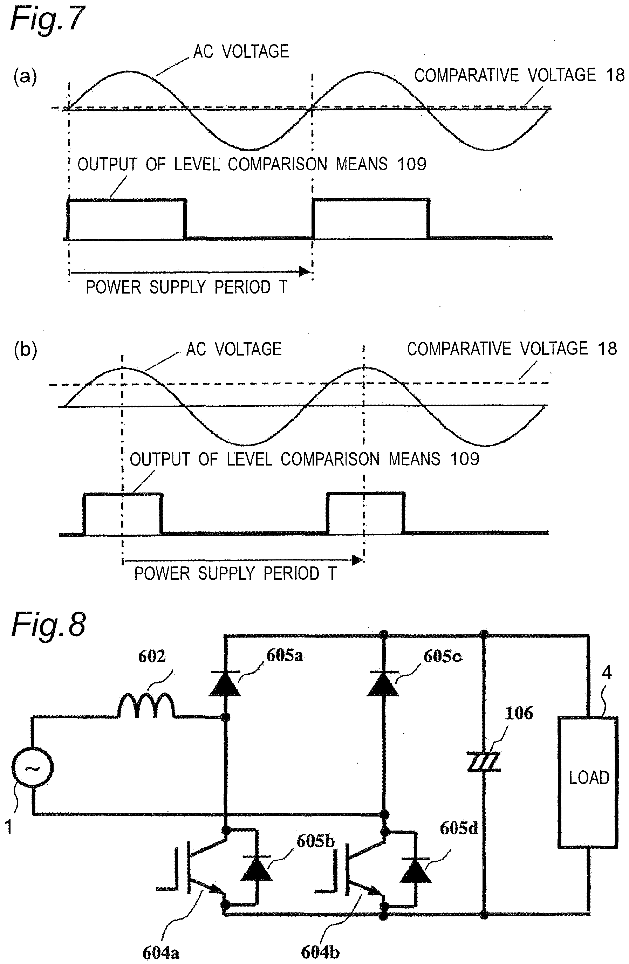

Fig. 7 is a waveform diagram illustrating a method for detecting the voltage phase from information about whether or not the AC voltage is equal to or higher than a certain level. This information is provided as a binary signal indicating whether or not the momentum voltage of the AC voltage is higher than a threshold value. Even if the threshold value is varied, the binary signal has the same period as the period corresponding to the power-supply frequency. Therefore, it is possible to determine the time at which the AC-voltage phase is 90 or 270 degrees, by determining the midpoint of the Hi-side or the Lo-side in the binary signal. Further, the midpoints between 90 degrees and 270 degrees correspond to phases of 180 and 0 degrees. By multiplying the information provided as described above, using a PLL or the like, it is possible to determine the phase in each moment. For example, by multiplying it by 360, a single pulse is made to correspond to 1 degree. Thus, by counting these pulses, it is possible to obtain phase information in units of degrees. Further, based on the obtained phase information, it is possible to call up the target electric-current waveform in each moment. Another method for detecting a phase using binary information obtained through level comparisons is also suggested in JP-A No. 2001-45763 provided by inventors including the same inventors, for example. The method therefor is not particularly limited.

As described above, by employing the rectifier circuit device according to the second embodiment, even when the DC voltage is detected with such accuracy as to induce errors, the DC voltage is relatively adjusted such that the phase at which the changeover occurs from the chopping operation to the chopping halt comes to be a desired phase, which can provide the same electric-current waveform, thereby continuously reducing losses. Further, it is possible to secure the phase width (θ_{ON} width) within which the chopping is continued, which can realize rectification operations which induce reduced harmonic electric currents, without being influenced by the magnitudes of the electric power and the reactor.

Further, in cases where an inverter is driven, it is possible to expect improvement of the efficiency through reduction of the voltage.

### (Third Embodiment)

Next, a rectifier circuit device according to a third embodiment of the present invention will be described.

Fig. 8 is a circuit diagram illustrating a basic circuit structure of the rectifier circuit device according to the third embodiment of the present invention. In the rectifier circuit device according to the third embodiment illustrated in Fig. 8, an AC power supply 1 is connected, through a reactor 602, to a bridge circuit constituted by semiconductor switches 604a and 604b and diodes 605a, 605b, 605c and 605d, wherein the electric current having been rectified by this bridge circuit is supplied to a smoothing capacitor 106 and a load 4, thereby driving the load 4. The control method with the rectifier circuit device according to the third embodiment is the same as that in the first embodiment illustrated in Fig. 1 and can be realized by driving the two semiconductor switches 604a and 604b at the same time.

### (Fourth Embodiment)

Next, there will be described a rectifier circuit device according to a fourth embodiment of the present invention.

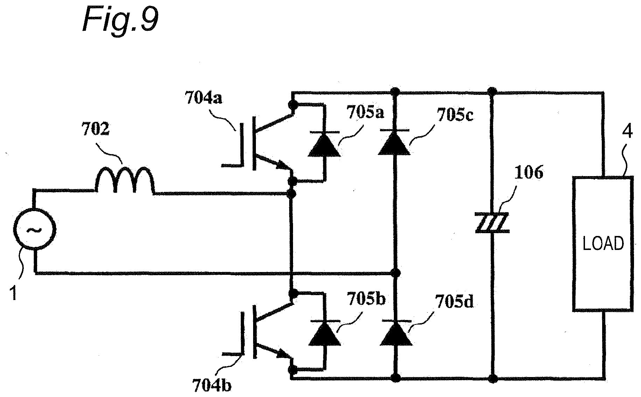

Fig. 9 is a circuit diagram illustrating a basic circuit structure of the rectifier circuit device according to the fourth embodiment of the present invention. In the rectifier circuit device according to the fourth embodiment illustrated in Fig. 9, an AC power supply 1 is connected, through a reactor 702, to a bridge circuit constituted by semiconductor switches 704a and 704b and diodes 705a, 705b, 705c and 705d, wherein the electric current having been rectified by this bridge circuit is supplied to a smoothing capacitor 106 and a load 4, thereby driving the load 4. The control method with the rectifier circuit device according to the fourth embodiment is basically the same as that in the first embodiment illustrated in Fig. 1, but is different therefrom in performing chopping on only one of the semiconductor switches, according to the polarity of the AC power supply.

For example, within intervals within which the polarity of the AC power supply 1 is higher at its side connected to the reactor 702, chopping is performed on the semiconductor switch 704b. Further, within intervals within which the polarity of the AC power supply 1 is lower at its side connected to the reactor 702, chopping is performed on the semiconductor switch 704a. Further, in the fourth embodiment, if the semiconductor switches 704a and 704b are turned on at the same time, this will cause short-circuiting of the DC output. Therefore, near the reverse of the polarity of the AC power supply 1, namely near a phase of 0 degrees and near a phase of 180 degree, both of the semiconductor switches may be prevented from being turned on, in some cases. This is because, in this case, if both the semiconductor switches 704a and 704b in Fig. 9 are turned on at the same time, this will cause danger. In cases of preventing short-circuiting of the DC output, as described above, the control portion purposefully halts the chopping, and the control portion itself can recognize the chopping state. Therefore, by not treating it as a phase at which the changeover occurred from the chopping to the halt state according to the present invention, it is possible to further facilitate the control.

Further, as common matters in all the embodiments, when the chopping condition is changed from the halt state to the chopping state or is changed vice versa, it may be momentarily changed to the halt state or to the chopping state due to noises and fluctuations in the circuit. To cope therewith, by not treating them as phases at which the changeover occurred from the chopping according to the present invention to the halt state or as phases at which the changeover occurred to the chopping state, it is possible to easily realize the present invention.

Further, the methods for implementing the present invention have been described as using information about the phase of the power supply voltage. However, in cases where the power supply is fixed in frequency, it is obvious that the same control can be implemented using time information, based on information about zero cross of the AC power supply and the like. Similarly, it is obvious that it is also possible to implement the present invention through a method which counts pulses in carrier signals for realizing PWM control, which is an example of a chopping scheme, instead of measuring the time.

### Industrial Applicability

As described above, the rectifier circuit device according to the present invention is capable of attaining both suppression of harmonic electric currents and reduction of circuit losses. Therefore, the rectifier circuit device according to the present invention can be also applied to applications for compressing refrigerants with compressors for forming heat pumps for cooling, heating or freezing of food, and the like.

### Reference Signs List

1 AC power supply
100 Control means
102, 602, 702 Reactor
103 Electric-current detection means
104, 604a, 604b, 704a, 704b Semiconductor switch
106 Smoothing capacitor
109 Voltage-level comparison means
110 DC-voltage detection means
201 AC-phase detection means
202 Target electric-current waveform formation means

## Claims

1. A rectifier circuit device adapted to perform chopping on a semiconductor switch (104) for short-circuiting and opening a single-phase AC power supply (1) through a reactor (102) and to supply an electric current from an AC side to a DC side through the reactor (102), the rectifier circuit device comprising:
means (103) for detecting an electric current (lac) in the AC side;
means (110) for detecting a DC voltage (Vdc); and
control means (100), **characterized in that**
the control means (100) includes
means (202) for forming a target electric-current waveform having a frequency equal to that of an AC voltage waveform;
means (205, 212, 213) for forming an output-voltage command voltage (Vdc*); means (209, 210, 211) for adjusting and controlling the chopping on the semiconductor switch (104) such that a detected electric-current waveform has a shape equal to that of the target electric-current waveform; and
means for adjusting an amplitude of the target electric-current waveform such that the detected DC voltage (Vdc) comes to be a desired voltage in accordance with the output-voltage command voltage (Vdc*) which is output by the means (205, 212, 213) for forming the output-voltage command voltage (Vdc*) wherein
the means (205, 212, 213) for forming output-voltage command voltage includes chopping phase/width detection means (212) which detects a phase (θ_{OFF}) at which the semiconductor switch changes from a chopping state to a chopping halt state;
deviation setting means (213) which compares between a desired phase (θ_{OFF}*) and the phase (θ_{OFF}) at which the semiconductor switch changes from a chopping state to a chopping halt state so as to output a deviation; and
phase-system compensation operating means (205) which convert the deviation into voltage to form the output-voltage command voltage (Vdc*) and
which adjusts the output-voltage command voltage (Vdc*)
such that a phase (θ_{OFF}) at which the semiconductor switch (104) changes from a chopping state to a chopping halt state comes to be a desired phase (θ_{OFF}*).

2. The rectifier circuit device according to Claim 1, wherein
the control means (100) is adapted to determine a phase (θ_{ON}) at which the semiconductor switch (104) changes from the halt state to the chopping state in addition to the phase (θ_{OFF}) at which the semiconductor switch (104) changes from the chopping state to the chopping halt state, to calculate a phase width (θ_{ON} width) within which the chopping state is continued, from the phase (θ_{OFF}) at which the semiconductor switch (104) changes from the chopping state to the chopping halt state and from the phase (θ_{ON}) at which the semiconductor switch (104) changes from the halt state to the chopping state, and to adjust the output-voltage command voltage (Vdc*) such that the phase width (θ_{ON} width) within which the chopping state is continued comes to be a preset value (θ_{ON} width*), in preference to the adjustment of the DC voltage (Vdc) based on the phase (θ_{OFF}) at which the semiconductor switch (104) changes from the chopping state to the chopping halt state, when the phase width (θ_{ON} width) within which the chopping state is continued is less than the preset value (θ_{ON} width*), before the phase (θ_{OFF}) at which the semiconductor switch (104) changes from the chopping state to the chopping halt state comes to be the desired phase (θ_{OFF}*).

3. The rectifier circuit device according to Claim 1 or 2, wherein
the target electric-current waveform has a monotonous increase or a combination of a monotonous increase and a constant value, within the AC-phase range of 0 to 90 degrees or 180 to 270 degrees and, further, has a value of zero in an interval within the-AC phase ranges of 90 to 180 degrees and 270 to 360 degrees.

4. The rectifier circuit device according to Claim 1 or 2, wherein
the target electric-current waveform has a monotonous increase or a combination of a monotonous increase and a constant value, up to the desired phase (θ_{OFF}*) at which the semiconductor switch (104) changes from the chopping state to the chopping halt state, within the AC-phase range of 0 to 90 degrees or 180 to 270 degrees and, further, has a value of zero in an interval within the AC-phase ranges of 90 to 180 degrees and 270 to 360 degrees.

5. The rectifier circuit device according to any one of Claims 1 to 4, wherein further comprising voltage-level comparison means (109) which detects a magnitude relationship between the AC voltage of the single-phase AC power supply (1) and a constant voltage and binarizes the magnitude relationship,
wherein the control means (100) estimates the phase of the AC voltage based on a period and a phase of the resultant binary signal from the voltage-level comparison means (109), to form a target electric-current waveform based on the estimated phase, and to detect the phase (θ_{OFF}) at which the semiconductor switch (104) changes from the chopping state to the chopping halt state, and the phase (θ_{ON}) at which the semiconductor switch (104) changes from the chopping halt state to the chopping state, based on information about the estimated phase and, further, to calculate the desired phase (θ_{OFF}*). the phase width (θ_{ON} width) within which the chopping is continuously performed, and the desired phase width (θ_{ON} width*).

6. The rectifier circuit device according to any one of Claims 1 to 5, wherein
when two or more phases (θ_{OFF}) at which the semiconductor switch (104) changes from the chopping state to the chopping halt state appear during half the period of the AC power supply (1), a phase value closer to an AC-power-supply phase of 90 degrees or 270 degrees is used.

## Patentansprüche

1. Gleichrichter, der geeignet ist, das Ein-/Abschalten bei einem Halbleiterschalter (104) zum Kurzschließen und Öffnen einer einphasigen Wechselspannungsquelle (1) durch eine Drossel (102) auszuführen und einen elektrischen Strom von einer Wechselstromseite an eine Gleichstromseite durch die Drossel (102) zu liefern, wobei der Gleichrichter Folgendes umfasst:
Mittel (103) zum Detektieren eines elektrischen Stroms (lac) in der Wechselstromseite;
Mittel (110) zum Detektieren einer Gleichspannung (Vdc); und
Steuermittel (100), **dadurch gekennzeichnet, dass**
die Steuermittel (100) Folgendes umfassen:
Mittel (202) zum Bilden einer Soll-Stromwellenform mit einer Frequenz, die gleich der einer Wechselspannungswellenform ist;
Mittel (205, 212, 213) zum Bilden einer Ausgangsspannungs-Befehlsspannung (Vdc*);
Mittel (209, 210, 211) zum Anpassen und Steuern des Ein-/Abschaltens beim Halbleiterschalter (104) derart, dass eine detektierte Stromwellenform eine Form hat, die gleich der der Soll-Stromwellenform ist; und
Mittel zum Anpassen einer Amplitude der Soll-Stromwellenform derart, dass die detektierte Gleichspannung (Vdc) eine gewünschte Spannung in Übereinstimmung mit der Ausgangsspannungs-Befehlsspannung (Vdc*) wird, die von den Mitteln (205, 212, 213) zum Bilden der Ausgangsspannungs-Befehlsspannung (Vdc*) ausgegeben wird, wobei
die Mittel (205, 212,213) zum Bilden einer Ausgangsspannungs-Befehlsspannung Ein-/Abschalt-Phasenbreite-Detektionsmittel (212) umfassen, die eine Phase (θ_{OFF}) detektieren, bei der der Halbleiterschalter von einem Ein-/Abschalt-Zustand zu einem Ein-/Abschalt-Halt-Zustand wechselt;
Abweichungseinstellmittel (213), die zwischen einer gewünschten Phase (θ_{OFF}*) und der Phase (θ_{OFF}) vergleichen, bei der der Halbleiterschalter von einem Ein-/Abschalt-Zustand zu einem Ein-/Abschalt-Halt-Zustand wechselt, um eine Abweichung auszugeben; und
Phasensystem-Kompensationsoperationsmittel (205), die die Abweichung in eine Spannung umwandeln, um die Ausgangsspannungs-Befehlsspannung (Vdc*) zu bilden, und die die Ausgangsspannungs-Befehlsspannung (Vdc*) derart anpassen, dass eine Phase (θ_{OFF}), bei der der Halbleiterschalter (104) von einem Ein-/Abschalt-Zustand zu einem Ein-/Abschalt-Halt-Zustand wechselt, eine gewünschte Phase (θ_{OFF}*) wird.

2. Gleichrichter nach Anspruch 1, wobei
die Steuermittel (100) geeignet sind, eine Phase (θ_{ON}), bei der der Halbleiterschalter (104) vom Halt-Zustand zum Ein-/Abschalt-Zustand wechselt, zusätzlich zu der Phase (θ_{OFF}) zu bestimmen, bei der der Halbleiterschalter (104) vom Ein-/Abschalt-Zustand zum Ein-/Abschalt-Halt-Zustand wechselt, um eine Phasenbreite (θ_{ON} width), innerhalb der der Ein-/Abschalt-Zustand aufrechterhalten wird, von der Phase (θ_{OFF}), bei der der Halbleiterschalter (104) vom Ein-/Abschalt-Zustand zum Ein-/Abschalt-Halt-Zustand wechselt, und von der Phase (θ_{ON}), bei der der Halbleiterschalter (104) vom Halt-Zustand zum Ein-/Abschalt-Zustand wechselt, zu berechnen und die Ausgangsspannungs-Befehlsspannung (Vdc*) derart anzupassen, dass die Phasenbreite (θ_{ON} width), innerhalb der der Ein-/Abschalt-Zustand aufrechterhalten wird, einen voreingestellten Wert (θ_{ON} width*) annimmt, anstelle der Anpassung der Gleichspannung (Vdc) auf der Grundlage der Phase (θ_{OFF}), bei der der Halbleiterschalter (104) vom Ein-/Abschalt-Zustand zum Ein-/Abschalt-Halt-Zustand wechselt, wenn die Phasenbreite (θ_{ON} width), innerhalb der der Ein-/Abschalt-Zustand aufrechterhalten wird, geringer als der voreingestellte Wert (θ_{ON} width*) ist, bevor die Phase (θ_{OFF}), bei der der Halbleiterschalter (104) vom Ein-/Abschalt-Zustand zum Ein-/Abschalt-Halt-Zustand wechselt, die gewünschte Phase (θ_{OFF}*) wird.

3. Gleichrichter nach Anspruch 1 oder 2, wobei
die Soll-Stromwellenform einen monotonen Anstieg oder eine Kombination aus einem monotonen Anstieg und einem konstanten Wert im Wechselstromphasenbereich von 0 bis 90 Grad oder von 180 bis 270 Grad aufweist und ferner einen Wert Null in einem Intervall im Wechselstromphasenbereich von 90 bis 180 Grad und von 270 bis 360 Grad hat.

4. Gleichrichter nach Anspruch 1 oder 2, wobei
die Soll-Stromwellenform einen monotonen Anstieg oder eine Kombination aus einem monotonen Anstieg und einem konstanten Wert bis zu der gewünschten Phase (θ_{OFF}*), bei der der Halbleiterschalter (104) vom Ein-/Abschalt-Zustand zum Ein-/Abschalt-Halt-Zustand wechselt, im Wechselstromphasenbereich von 0 bis 90 Grad oder von 180 bis 270 Grad aufweist und ferner einen Wert Null in einem Intervall im Wechselstromphasenbereich von 90 bis 180 Grad und von 270 bis 360 Grad hat.

5. Gleichrichter nach einem der Ansprüche 1 bis 4, ferner umfassend Spannungspegel-Vergleichsmittel (109), die eine Größenbeziehung zwischen der Wechselspannung der einphasigen Wechselspannungsquelle (1) und einer konstanten Spannung detektiert und die Größenbeziehung binärisiert, wobei die Steuermittel (100) die Phase der Wechselspannung auf der Grundlage einer Periode und einer Phase des resultierenden Binärsignals von den Spannungspegel-Vergleichsmitteln (109) schätzen, um eine Soll-Stromwellenform auf der Grundlage der geschätzten Phase zu bilden und die Phase (θ_{OFF}), bei der der Halbleiterschalter (104) vom Ein-/Abschalt-Zustand zum Ein-/Abschalt-Halt-Zustand wechselt, und die Phase (θ_{ON}), bei der der Halbleiterschalter (104) vom Ein-/Abschalt-Halt-Zustand zum Ein-/Abschalt-Zustand wechselt, auf der Grundlage von Informationen über die geschätzte Phase zu detektieren und ferner die gewünschte Phase (θ_{OFF}*), die Phasenbreite (θ_{ON} width), in der das Ein-/Abschalten ständig ausgeführt wird, und die gewünschte Phasenbreite (θ_{ON} width*) zu berechnen.

6. Gleichrichter nach einem der Ansprüche 1 bis 5, wobei
dann, wenn zwei oder mehr Phasen (θ_{OFF}), bei denen der Halbleiterschalter (104) vom Ein-/Abschalt-Zustand zum Ein-/Abschalt-Halt-Zustand wechselt, während der halben Periodendauer der Wechselspannungsquelle (1) auftreten, ein Phasenwert verwendet wird, der näher bei einer Wechselspannungsquellenphase von 90 Grad oder 270 Grad liegt.

## Revendications

1. Dispositif de circuit redresseur conçu pour effectuer un découpage sur un interrupteur à semi-conducteur (104) pour court-circuiter et ouvrir une alimentation en courant CA monophasé (1) à travers un réacteur (102) et pour fournir un courant électrique d'un côté CA à un côté CC à travers le réacteur (102), le dispositif de circuit redresseur comprenant :
des moyens (103) pour détecter un courant électrique (lac) dans le côté CA ;
des moyens (110) pour détecter une tension CC (Vdc) ; et
des moyens de commande (100), **caractérisé en ce que**
les moyens de commande (100) comprennent
des moyens (202) pour former une forme d'onde de courant électrique cible ayant une fréquence égale à celle d'une forme d'onde de tension CA ;
des moyens (205, 212, 213) pourformer une tension de commande de tension de sortie (Vdc*) ;
des moyens (209, 210, 211) pour ajuster et commander le découpage sur l'interrupteur à semi-conducteur (104) de telle sorte qu'une forme d'onde de courant électrique détectée a une forme égale à celle de la forme d'onde de courant électrique cible ; et
des moyens pour ajuster une amplitude de la forme d'onde de courant électrique cible de telle sorte que la tension CC (Vdc) devient une tension souhaitée en fonction de la tension de commande de tension de sortie (Vdc*) qui est délivrée par les moyens (205, 212, 213) pour former la tension de commande de tension de sortie (Vdc*)
dans lequel
les moyens (205, 212, 213) pour former une tension de commande de tension de sortie comprennent des moyens de détection de phase/largeur de découpage (212) qui détectent une phase (θ_{OFF}) au niveau de laquelle l'interrupteur à semi-conducteur passe d'un état de découpage à un état d'arrêt de découpage ;
des moyens de réglage de déviation (213) qui comparent entre une phase souhaitée (θ_{OFF}*) et la phase (θ_{OFF}) au niveau de laquelle l'interrupteur à semi-conducteur passe d'un état de découpage à un état d'arrêt de découpage de façon à délivrer une déviation ; et
des moyens d'actionnement de compensation de système de phase (205) qui convertissent la déviation en tension pour former la tension de commande de tension de sortie (Vdc*) et qui ajustent la tension de commande de tension de sortie (Vdc*) de telle sorte qu'une phase (θ_{OFF}) au niveau de laquelle l'interrupteur à semi-conducteur (104) passe d'un état de découpage à un état d'arrêt de découpage est une phase souhaitée (θ_{OFF}*).

2. Dispositif de circuit redresseur selon la revendication 1, dans lequel les moyens de commande (100) sont conçus pour déterminer une phase (θ_{ON}) au niveau de laquelle l'interrupteur à semi-conducteur (104) passe de l'état d'arrêt à l'état de découpage en complément de la phase (θ_{OFF}) au niveau de laquelle l'interrupteur à semi-conducteur (104) passe de l'état de découpage à l'état d'arrêt de découpage, pour calculer une largeur de phase (θ_{ON} width) à l'intérieur de laquelle l'état de découpage est poursuivi, à partir de la phase (θ_{OFF}) au niveau de laquelle l'interrupteur à semi-conducteur (104) passe de l'état de découpage à l'état d'arrêt de découpage et à partir de la phase (θ_{ON}) au niveau de laquelle l'interrupteur à semi-conducteur (104) passe de l'état d'arrêt à l'état de découpage, et pour ajuster la tension de commande de tension de sortie (Vdc*) de telle sorte que la largeur de phase (θ_{ON} width) à l'intérieur de laquelle l'état de découpage est poursuivi devient une valeur prédéfinie (θ_{ON} width*), de préférence à l'ajustement de la tension CC (Vdc) sur la base de la phase (θ_{OFF}) au niveau de laquelle l'interrupteur à semi-conducteur (104) change de l'état de découpage à l'état d'arrêt de découpage, lorsque la largeur de phase (θ_{ON} width) à l'intérieur de laquelle l'état de découpage est poursuivi est inférieure à la valeur prédéfinie (θ_{ON} width*), avant que la phase (θ_{OFF}) au niveau de laquelle l'interrupteur à semi-conducteur (104) passe de l'état de découpage à l'état d'arrêt de découpage ne devienne la phase souhaitée (θ_{OFF}*).

3. Dispositif de circuit redresseur selon la revendication 1 ou 2, dans lequel la forme d'onde de courant électrique cible a une augmentation monotone ou une combinaison d'une augmentation monotone et d'une valeur constante, à l'intérieur de la plage de phase CA de 0 à 90 degrés ou 180 à 270 degrés et, en outre, a une valeur nulle dans un intervalle à l'intérieur des plages de phase CA de 90 à 180 degrés et 270 à 360 degrés.

4. Dispositif de circuit redresseur selon la revendication 1 ou 2, dans lequel la forme d'onde de courant électrique cible a une augmentation monotone ou une combinaison d'une augmentation monotone et d'une valeur constante, jusqu'à la phase souhaitée (θ_{OFF}*) au niveau de laquelle l'interrupteur à semi-conducteur (104) passe de l'état de découpage à l'état d'arrêt de découpage, à l'intérieur de la plage de phase CA de 0 à 90 degrés ou 180 à 270 degrés et, en outre, a une valeur nulle dans un intervalle à l'intérieur des plages de phase CA de 90 à 180 degrés et 270 à 360 degrés.

5. Dispositif de circuit redresseur selon l'une quelconque des revendications 1 à 4,
comprenant en outre des moyens de comparaison de niveau de tension (109) qui détectent une relation d'amplitude entre la tension CA de l'alimentation en courant CA monophasé (1) et une tension constante et binarise la relation d'amplitude,
les moyens de commande (100) estimant la phase de la tension CA sur la base d'une période et une phase du signal binaire résultant à partir des moyens de comparaison de niveau de tension (109), pour former une forme d'onde de courant électrique cible sur la base de la phase estimée, et pour détecter la phase (θ_{OFF}) au niveau de laquelle l'interrupteur à semi-conducteur (104) passe de l'état de découpage à l'état d'arrêt de découpage, et la phase (θ_{ON}) au niveau de laquelle l'interrupteur à semi-conducteur (104) passe de l'état d'arrêt de découpage à l'état de découpage, sur la base d'informations concernant la phase estimée et, en outre, pour calculer la phase souhaitée (θ_{OFF}*), la largeur de phase (θ_{ON} width) à l'intérieur de laquelle le découpage est réalisé en continu, et la largeur de phase souhaitée (θ_{ON} width*).

6. Dispositif de circuit redresseur selon l'une quelconque des revendications 1 à 5, dans lequel
lorsqu'au moins deux phases (θ_{OFF}) au niveau desquelles l'interrupteur à semi-conducteur (104) passe de l'état de découpage à l'état d'arrêt de découpage apparaissent pendant la moitié de la période de l'alimentation en courant CA (1), une valeur de phase plus proche d'une phase d'alimentation en courant CA de 90 degrés ou 270 degrés est utilisée.
